# EUROPÄISCHE PATENTANMELDUNG

(11) **EP 3 251 495 A1**
(43) Veröffentlichungstag der Anmeldung: **06.12.2017**
(21) Anmeldenummer: 17000862.7
(22) Anmeldetag: 19.05.2017
(51) Int. Cl.: A01G 9/10, A01C 1/04, A01G 31/00

(54) **PFLANZMATTE SOWIE SAATGUTMATTE**

(30) Priorität: 01.06.2016 DE 202016003363 U
(71) Anmelder: Melotis GmbH, 21271 Asendorf (DE)
(72) Erfinder: Reddig, Horst, 21271 Asendorf (DE)
(74) Vertreter: Hofmeister, Frank

(57) **Zusammenfassung**

Die Erfindung betrifft eine Pflanzmatte zur Förderung des Wachstums von Pflanzen, mit einer aus einem verrottbaren Material bestehenden Trägerschicht (1). Weiterhin betrifft die Erfindung eine Saatgutmatte mit einer aus einem verrottbaren Material bestehenden Trägerschicht (1). Um eine verbesserte Pflanzmatte sowie Saatgutmatte bereitzustellen, wird mit der Erfindung vorgeschlagen, dass die Trägerschicht (1) aus Tierhaar besteht.

## Beschreibung

Die Erfindung betrifft eine Pflanzmatte zur Förderung des Wachstums von Pflanzen, mit einer aus einem verrottbaren Material bestehenden Trägerschicht. Weiterhin betrifft die Erfindung eine Saatgutmatte mit einer aus einem verrottbaren Material bestehenden Trägerschicht.

Pflanzmatten und Saatgutmatten sind aus der Praxis in unterschiedlichen Ausgestaltungsformen bekannt. In der überwiegenden Zahl der Fälle besteht die verrottbare Trägerschicht dieser bekannten Matten aus Papier, das durch Feuchtigkeitseinwirkung schnell verrotten kann. Diese mit Düngemittel und/oder Saatgut bestückten Matten dienen einerseits zum Abdecken des Untergrunds und andererseits zum gezielten Einbringen der Zugabestoffe Düngemittel und/oder Saatgut an den Boden.

Weiterhin sind Pflanzmatten bekannt, deren Trägerschicht Materialien wie Stroh oder Holz enthält.

Eine gattungsgemäße Pflanzmatte sowie eine Saatgutmatte sind beispielsweise aus der DE 695 18 765 T2 bekannt. Bei diesen bekannten Matten besteht die mit einem Düngemittel und/oder Saatgut beaufschlagte Trägerschicht aus gepressten zerfaserten Papierstreifen.

In den aus der Praxis bekannten Fällen dient die Trägerschicht ausschließlich zum Stabilisieren der Matten und als Träger für die einzubringenden Zugabestoffe, wie beispielsweise Düngemittel und/oder Saatgut.

Davon ausgehend liegt der Erfindung die **Aufgabe** zugrunde, eine verbesserte Pflanzmatte sowie Saatgutmatte bereitzustellen.

Die Lösung dieser Aufgabenstellung ist erfindungsgemäß dadurch gekennzeichnet, dass die Trägerschicht aus Tierhaar besteht.

Durch die Verwendung von Tierhaar als Material zur Ausbildung der Trägerschicht wird erstmalig ein Trägerschichtmaterial verwendet, das, beispielsweise aufgrund seines Stickstoff-Gehalts von ca. 10%, von sich aus, also ohne Zusatz, Düngestoffe enthält, die beim Zersetzen durch die Mikroorganismen des Bodens an den Boden und somit die Pflanzen abgegeben werden.

Die gefilzte Pflanzmatte stellt darüber hinaus im Boden einen Feuchtigkeitsspeicher dar.

Aufgrund des hohen Aufkommens sowie der hohen Ausbeute pro Tier wird gemäß einer praktischen ausführungsform der Erfindung vorgeschlagen, dass das die Trägerschicht bildende Tierhaar Schafwolle ist. Ebenfalls gut geeignet sind die Haare von Tieren der Familie der Kamele, wie beispielsweise die Wolle des Alpaka.

Mit einer praktischen Ausführungsform der Erfindung wird vorgeschlagen, dass das Ausbilden des Flächenmaterials für die Trägerschicht durch Filzen des Tierhaars hergestellt wird. Das Filzen stellt ein in der Textilverarbeitung geläufiges und kostengünstiges Verfahren zur Herstellung von textilem Flächengebilde dar. Selbstverständlich sind auch andere textile Verarbeitungsverfahren, wie beispielsweise Weben, anwendbar, um das textile Flächengewebe für die Trägerschicht der Pflanzmatte herzustellen.

Um die Feuchtigkeitsspeicherung der Pflanzmatte weiter zu steigern wird gemäß einer bevorzugten Ausführungsform der Erfindung vorgeschlagen, dass der Trägerschicht zusätzlich mindestens eine Naturfaser, insbesondere eine feuchtigkeitsbindende Naturfaser, wie beispielsweise Hanf, zugesetzt ist. Hanffasern zeichnen sich durch ihre guten Fähigkeiten zur Speicherung von hygroskopischem Wasser aus. Die Wasserspeicherung in den Hanffasern verbessert einerseits die Wasserversorgung der mit der Pflanzmatte versehenen Pflanze und verbessert andererseits die Verrottung der Pflanzmatte an sich.

Weiterhin kann die Feuchtigkeitsspeicherung der Pflanzmatte erfindungsgemäß dadurch weiter gesteigert werden, dass die Trägerschicht mit einer feuchtigkeitsbindende Substanz, beispielsweise einem Gel auf Harnstoffbasis, benetzbar ist. Harnstoff weist hierbei zusätzlich zu der feuchtigkeitsbindenden Eigenschaft den Vorteil auf, dass der Harnstoff als zusätzlicher Stickstofflieferant zur Versorgung der mit der Pflanzmatte versehenen Pflanze verwendet werden kann.

Alternativ zur Herstellung der Trägerschicht der Pflanzmatte als reines Flächengewebe wird mit der Erfindung weiterhin vorgeschlagen, dass die Trägerschicht auch als Schlauch oder Sack ausbildbar ist. Die Ausbildung der Pflanzmatte als Schlauch eignet sich beispielsweise für Blumenkästen oder Hochbeete. Hierfür wird die Pflanzmatte als mit Erde gefüllter Schlauch dem Nutzer geliefert, der vor Ort, beispielsweise im Blumenkasten den Schlauch der Länge nach aufschneidet und dann die Pflanze in die enthaltene Erde pflanzt. Über den im Tierhaar der Trägerschicht enthaltenen Stickstoff werden die Pflanzen beim Verrotten der Pflanzmatte kontinuierlich mit Stickstoff versorgt.

Ebenso ist es möglich, die Pflanzmatte als Sack ausgebildet zur Lagerung und zum Transport von Erde zu benutzen. Nach dem Öffnen kann der Sack bzw. die Pflanzmatte untergegraben werden und dient vor Ort als Stickstoffspender.

Um beispielsweise Schimmelbildung im Boden oder Pflanzenkrankheiten, wie beispielsweise der Erdbeerwelke, vorzubeugen, wird mit der Erfindung vorgeschlagen, dass das Material der Trägerschicht zusätzlich mit mindestens einem Bakterium der Gattung Bacillus beaufschlagbar ist. Vorteilhafterweise wird hierfür der Bacillus subtilis verwendet.

Gemäß einer praktischen Ausführungsform der Erfindung ist das mindestens eine Bakterium der Gattung Bacillus mittels einer Trägersubstanz in das Material der Trägerschicht eingebettet, die den Bacillus mit Nahrung versorgt, solange die Pflanzmatte nicht in den Boden eingearbeitet oder auf dem Erdreich ausgebreitet ist, wo der Bacillus über das Erdreich und/oder die Pflanze mit Nahrung versorgt wird. Als Trägersubstanz für das mindestens eine Bakterium der Gattung Bacillus kann beispielsweise Obsttrester dienen, der aufgrund des enthaltenen Fruchtzuckers eine gute Nahrungsgrundlage für den Bacillus dienen kann.

Weiterhin betrifft die Erfindung eine Saatgutmatte mit einer aus einem verrottbaren Material bestehenden Trägerschicht, die erfindungsgemäß dadurch gekennzeichnet ist, dass die Trägerschicht aus gefilztem Tierhaar besteht und ein Lage Saatgut enthält.

Durch die Verwendung von Tierhaar als Material zur Ausbildung der Trägerschicht wird erstmalig ein Trägerschichtmaterial verwendet, das, beispielsweise aufgrund seines Stickstoff-Gehalts von ca. 10%, von sich aus, also ohne Zusatz, Düngestoffe enthält, die beim Zersetzen durch die Mikroorganismen des Bodens an den Boden und das in der Trägerschicht enthaltene Saatgut abgegeben werden. Das gefilzte Material der Trägerschicht dient gleichzeitig auch als Feuchtigkeitsspeicher sowie Wind- und Vogelschutz für das enthaltene Saatgut. Weiterhin ermöglicht das gefilzte Material der Trägerschicht eine gute Durchwurzelung sowie einen guten Halt für die Wurzeln des keimenden Saatguts.

Um auch bei kleinkörnigem Saatgut ein lagefestes Einbetten des Saatguts in das Material der Trägerschicht zu ermöglichen, wird mit der Erfindung vorgeschlagen, dass das Saatgut mittels einer Trägersubstanz in das Material der Trägerschicht eingebettet ist. Durch die Nutzung der Trägersubstanz wird das Volumen der Saatgutkörner vergrößert und so gewährleistet, dass diese lagefest in der gefilzten Trägerschicht verbleiben.

Alternativ oder zusätzlich zur Verwendung einer Trägersubstanz wird Einbettung insbesondere sehr feinen Saatguts, wie beispielsweise bei Saatgut von Petersilie und Möhren, in die Trägerschicht vorgeschlagen, dass die Trägerschicht ein dicht verfilzte Unterschicht zur lagefesten Aufnahme des Saatguts aufweist.

Schließlich wird mit der Erfindung vorgeschlagen, dass das Material der Trägerschicht zusätzlich mit mindestens einem Bakterium der Gattung Bacillus, insbesondere dem Bacillus subtilis, beaufschlagbar ist, um das keimende Saatgut gleich vor Krankheiten zu schützen.

Neben der Herstellung von großflächigen Saatgutmatten wird mit der Erfindung vorgeschlagen, dass die mit dem Saatgut versehene Trägerschicht in der Form eines schmalen Saatbandes ausgebildet ist.

Weitere Merkmale und Vorteile der Erfindung ergeben sich anhand der zugehörigen Zeichnungen, in denen verschiedene Ausführungsbeispiele einer erfindungsgemäßen Pflanzmatte sowie einer Saatgutmatte nur beispielhaft dargestellt sind, ohne die Erfindung auf diese Ausführungsbeispiele zu beschränken. In den Zeichnungen zeigt:
- Fig. 1: eine schematische Draufsicht auf eine als Flächenmaterial ausgebildete erfindungsgemäße Pflanzmatte;
- Fig. 2: eine schematische Darstellung einer als Schlauch ausgebildeten Pflanzmatte;
- Fig. 3: eine schematische Darstellung einer als Sack ausgebildeten Pflanzmatte und
- Fig. 4: eine schematische Draufsicht auf eine erfindungsgemäße Saatgutmatte.

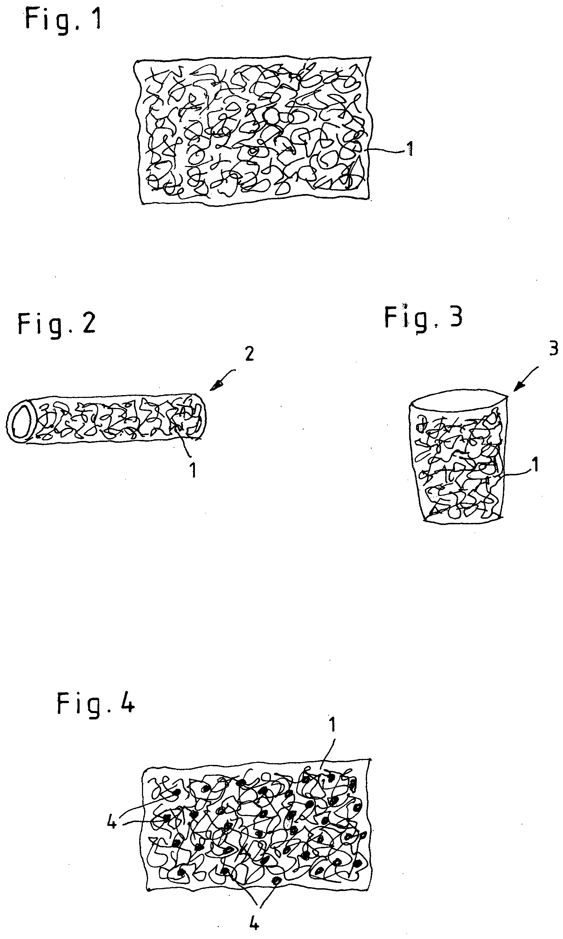

Die Abbildung Fig. 1 eine aus einer Trägerschicht 1 bestehende Pflanzmatte. Das verrottbare Material der Trägerschicht 1 sind hier Tierhaare, insbesondere Schafwolle, die vorzugsweise durch Filzen zu einem textilen Flächengewebe verarbeitet wurde.

Tierhaare mit einem Stickstoff-Gehalt von über 10% stellen einen guten Langzeitdünger dar. Schafwolle weist darüber hinaus eine Vielzahl weiterer pflanzenphysiologischer Inhaltsstoffe, wie beispielsweise Phosphor, Kalium und Schwefel, auf und verfügt über ein hohes Feuchtigkeitsspeicherungsvermögen.

Durch die Verwendung von Tierhaar als Material zur Ausbildung der Trägerschicht 1 der Pflanzmatte wird ein Trägerschichtmaterial verwendet, das, beispielsweise aufgrund seines Stickstoff-Gehalts, von sich aus, also ohne Zusatz, Düngestoffe enthält, die beim Zersetzen durch die Mikroorganismen des Bodens an den Boden und somit die Pflanzen abgegeben werden.

Um die Feuchtigkeitsspeicherung der Pflanzmatte weiter zu steigern kann der Trägerschicht zusätzlich mindestens eine Naturfaser, insbesondere eine feuchtigkeitsbindende Naturfaser, wie beispielsweise Hanf, zugesetzt werden. Hanffasern zeichnen sich durch ihre guten Fähigkeiten zur Speicherung von hygroskopischem Wasser aus. Die Wasserspeicherung in den Hanffasern verbessert einerseits die Wasserversorgung der mit der Pflanzmatte versehenen Pflanze und verbessert andererseits die Verrottung der Pflanzmatte an sich.

Der Anteil der Hanffasern am Material der Trägerschicht 1 kann je nach Anwendungsfall bis zu 50% betragen.

Weiterhin kann die Feuchtigkeitsspeicherung der Pflanzmatte dadurch weiter gesteigert werden, dass die Trägerschicht 1 mit einer feuchtigkeitsbindende Substanz, beispielsweise einem Gel auf Harnstoffbasis, benetzbar ist. Harnstoff weist hierbei zusätzlich zu der feuchtigkeitsbindenden Eigenschaft den Vorteil auf, dass der Harnstoff als zusätzlicher Stickstofflieferant zur Versorgung der mit der Pflanzmatte versehenen Pflanze verwendet werden kann.

Die in Fig. 1 dargestellte, als Flächenmaterial ausgebildete Pflanzmatte kann beispielsweise zum Umwickeln von Erd- und Wurzelballen sowie als feuchtigkeitsspeichernde Mulchmatte zum Abdecken von Beeten dienen. Die aus dem gefilzten Tierhaar bestehende Trägerschicht 1 der Matte ist wasserdurchlässig und gibt beim Verrotten gleichmäßig den enthaltenen Stickstoff und die anderen Inhaltsstoffe an den Boden und die Pflanzen ab.

In die flächenmäßig ausgelegte Pflanzmatte lassen sich zum Einsetzen einzelner Pflanzen Löcher schneiden, so dass die neue Pflanze rundum von der Matte umgeben ist. Durch die Abdeckung des Bodens wird zusätzlich das Wachstum von Unkraut unterdrückt.

Die Abbildungen Fig. 2 und 3 zeigen Alternativen zur Herstellung der Trägerschicht der Pflanzmatte als reines Flächengewebe.

Gemäß Fig. 2 ist die die Pflanzmatte bildende Trägerschicht 1 auch als Schlauch 2 ist. Die Ausbildung der Pflanzmatte als Schlauch 2 eignet sich beispielsweise für Blumenkästen oder Hochbeete. Hierfür wird die Pflanzmatte als mit Erde gefüllter Schlauch 2 dem Nutzer geliefert, der vor Ort, beispielsweise im Blumenkasten den Schlauch 2 der Länge nach aufschneidet und dann die Pflanze in die enthaltene Erde pflanzt.

Über den im Tierhaar der Trägerschicht 1 enthaltenen Stickstoff werden die Pflanzen beim Verrotten der Pflanzmatte kontinuierlich mit Stickstoff versorgt.

Die Skizze Fig. 3 zeigt die Möglichkeit, die Pflanzmatte als Sack 3 auszubilden, der beispielsweise zur Lagerung und zum Transport von Erde benutzt werden kann. Nach dem Öffnen kann der Sack 3 bzw. die Pflanzmatte untergegraben werden und dient vor Ort als Stickstoffspender.

Um beispielsweise Schimmelbildung im Boden oder Pflanzenkrankheiten, wie beispielsweise der Erdbeerwelke, vorzubeugen, ist das Material der Trägerschicht zusätzlich mit mindestens einem Bakterium der Gattung Bacillus beaufschlagbar ist. Vorteilhafterweise wird hierfür der Bacillus subtilis verwendet.

Die Abbildung Fig. 4 zeigt schließlich die Ausbildung der Pflanzmatte als Saatgutmatte, bei der die aus gefilztem Tierhaar bestehende Trägerschicht 1 zusätzlich eine Lage Saatgut 4 enthält.

Das gefilzte Material der Trägerschicht 1 dient neben der Tragfunktion für das Saatgut 4 gleichzeitig auch als Feuchtigkeitsspeicher sowie Wind- und Vogelschutz für das enthaltene Saatgut 4. Weiterhin ermöglicht das gefilzte Material der Trägerschicht 1 eine gute Durchwurzelung sowie einen guten Halt für die Wurzeln des keimenden Saatguts 4.

Um auch bei kleinkörnigem Saatgut 4 ein lagefestes Einbetten des Saatguts 4 in das Material der Trägerschicht 1 zu ermöglichen, kann das Saatgut 4 mittels einer Trägersubstanz in das Material der Trägerschicht 1 eingebettet sein. Durch die Nutzung der Trägersubstanz wird das Volumen der Saatgutkörner vergrößert und so gewährleistet, dass diese lagefest in der gefilzten Trägerschicht 1 verbleiben.

Alternativ oder zusätzlich zur Verwendung einer Trägersubstanz wird Einbettung insbesondere sehr feinen Saatguts, wie beispielsweise bei Saatgut 4 von Petersilie und Möhren, in die Trägerschicht 1 vorgeschlagen, dass die Trägerschicht 1 ein dicht verfilzte Unterschicht zur lagefesten Aufnahme des Saatguts 4 aufweist.

Neben der Herstellung von großflächigen Saatgutmatten kann die mit dem Saatgut versehene Trägerschicht 1 auch in der Form eines schmalen Saatbandes ausgebildet sein.

Die wie zuvor beschrieben ausgebildeten Pflanzmatten und Saatgutmatten zeichnen sich dadurch aus, dass das durch die in den Tierhaaren enthaltenen pflanzenphysiologischen Inhaltsstoffe, insbesondere den Stickstoff, die Pflanzen automatisch, das heißt ohne weitere Zugabe von Düngemittel mit Nährstoffen versorgt werden.

### Bezugszeichenliste

- 1: Trägerschicht
- 2: Schlauch
- 3: Sack
- 4: Saatgut

## Patentansprüche

1. Pflanzmatte zur Förderung des Wachstums von Pflanzen, mit einer aus einem verrottbaren Material bestehenden Trägerschicht (1),
**dadurch gekennzeichnet,**
**dass** die Trägerschicht (1) aus Tierhaar besteht.

2. Pflanzmatte nach Anspruch 1, **dadurch gekennzeichnet, dass** das die Trägerschicht (1) bildende Tierhaar Schafwolle oder Haare von Tieren der Familie der Kamele ist.

3. Pflanzmatte nach Anspruch 1 oder 2, **dadurch gekennzeichnet, dass** die Trägerschicht (1) durch Filzen des Tierhaars herstellbar ist.

4. Pflanzmatte nach einem der Ansprüche 1 bis 3, **dadurch gekennzeichnet, dass** der Trägerschicht (1) zusätzlich mindestens eine Naturfaser, insbesondere eine feuchtigkeitsbindende Naturfaser, wie beispielsweise Hanf, zugesetzt ist.

5. Pflanzmatte nach einem der Ansprüche 1 bis 4, **dadurch gekennzeichnet, dass** die Trägerschicht (1) mit einer feuchtigkeitsbindende Substanz, beispielsweise einem Gel auf Harnstoffbasis, benetzbar ist.

6. Pflanzmatte nach einem der Ansprüche 1 bis 5, **dadurch gekennzeichnet, dass** die Trägerschicht (1) auch als Schlauch (2) oder Sack (3) ausbildbar ist.

7. Pflanzmatte nach einem der Ansprüche 1 bis 6, **dadurch gekennzeichnet, dass** das Material der Trägerschicht (1) zusätzlich mit mindestens einem Bakterium der Gattung Bacillus beaufschlagbar ist.

8. Pflanzmatte nach Anspruch 7, **dadurch gekennzeichnet, dass** das mindestens eine Bakterium der Gattung Bacillus der Bacillus subtilis ist.

9. Pflanzmatte nach Anspruch 7 oder 8, **dadurch gekennzeichnet, dass** das mindestens eine Bakterium der Gattung Bacillus mittels einer Trägersubstanz in das Material der Trägerschicht (1) eingebettet ist.

10. Saatgutmatte mit einer aus einem verrottbaren Material bestehenden Trägerschicht (1),
**dadurch gekennzeichnet,**
**dass** die Trägerschicht (1) aus gefilztem Tierhaar besteht und ein Lage Saatgut (4) enthält.

11. Saatgutmatte nach Anspruch 10, **dadurch gekennzeichnet, dass** das Saatgut (4) mittels einer Trägersubstanz in das Material der Trägerschicht (1) eingebettet ist.

12. Saatgutmatte nach Anspruch 10 oder 11, **dadurch gekennzeichnet, dass** die Trägerschicht (1) ein dicht verfilzte Unterschicht zur Aufnahme des Saatguts (4) aufweist.

13. Saatgutmatte nach einem der Ansprüche 10 bis 12, **dadurch gekennzeichnet, dass** das Material der Trägerschicht (1) zusätzlich mit mindestens einem Bakterium der Gattung Bacillus, insbesondere dem Bacillus subtilis, beaufschlagbar ist.

14. Saatgutmatte nach einem der Ansprüche 10 bis 13, **dadurch gekennzeichnet, dass** die mit dem Saatgut (4) versehene Trägerschicht (1) in der Form eines schmalen Saatbandes ausgebildet ist.
